# EUROPÄISCHE PATENTSCHRIFT

(11) **EP 1 533 542 B1**
(45) Veröffentlichungstag und Bekanntmachung des Hinweises auf die Patenterteilung: **09.08.2006**
(21) Anmeldenummer: 03026716.5
(22) Anmeldetag: 21.11.2003
(51) Int. Cl.: F16F 13/16

(54) **Hydraulisch dämpfendes Buchsenlager**
Hydraulically damping Sleeve Bearing
Manchon anti-vibratoire hydraulique

(43) Veröffentlichungstag der Anmeldung: 25.05.2005
(73) Patentinhaber: ContiTech Vibration Control GmbH, 30165 Hannover (DE)
(72) Erfinder: Pfenning, Michael, 31515 Wunstorf (DE)
(74) Vertreter: Finger, Karsten

(56) Entgegenhaltungen:
- DE-A- 10 039 763
- FR-A- 2 593 255
- GB-A- 907 217
- US-A- 5 170 997
- US-A- 5 320 332
- US-A- 5 711 513

## Beschreibung

Die Erfindung betrifft ein hydraulisch dämpfendes Buchsenlager, mit einem Innenteil, das in eine Öffnung eines konzentrisch dazu im Abstand angeordneten Gehäuses eingefügt ist, wenigstens einer zwischen Innenteil und Gehäuse angeordneten Gummifeder, wobei das Innenteil wenigstens teilweise mit der Gummifeder verbunden ist, und einer Befestigungsvorrichtung, die das mit der Gummifeder verbundene Innenteil gegen ein axiales Herausrutschen aus dem Gehäuse sichert.

Gattungsgemäße Buchsenlager sind beispielsweise aus der DE 43 20 643 A1 oder der DE 101 63 555 A1 bekannt. In der DE 41 37 977 A1 ist ein hydraulisch dämpfendes Buchsenlager offenbart, das überwiegend senkrecht zu seiner Achsrichtung belastbar ist und zwei einander in achsparalleler Zuordnung umschließende Stützhülsen umfasst, die durch zumindest ein Federelement aus gummielastischem Werkstoff aufeinander abgestützt sind, wobei das Federelement die innere Stützhülse wenigstens teilweise umschließt.

Ein axiales Herausrutschen des mit der Gummifeder verbundenen Innenteils aus dem Gehäuse wird dadurch verhindert, dass die Ränder des Gehäuses umgebogen sind. Nachteilig an dieser Art einer Befestigungsvorrichtung ist, dass die Ränder des Gehäuses aus einer üblicherweise teueren Legierung bestehen, damit ein Umbiegen der Ränder überhaupt möglich ist. Das Anbringen dieser so genannten Bördelkante am Gehäuse ist aufwendig. Nachteilig ist außerdem, dass die umgebogene Bördelkante häufig den axial auftretenden Kräften nicht standhält und ein axiales Herausrutschen des mit der Gummifeder verbundenen Innenteils aus dem Gehäuse möglich ist. Dadurch ist der Zusammenhalt des Buchsenlagers während der üblichen Betriebsdauer nicht sichergestellt.

Aus der US 5,711,513 ist beispielsweise ein Buchsenlager nach dem Oberbegriff des Anspruchs 1 bekannt. Ein axiales Herausrutschen des mit der Gummifeder verbundenen Innenteils aus dem Gehäuse wird dadurch verhindert, dass der mit der Gummifeder in Kontakt stehende Klemmring mit dem Gehäuse verbunden ist, derart, dass entweder der Rand des Gehäuses nach innen um den Klemmring herum gebogen ist oder der Rand des Klemmrings nach außen um das Gehäuse herum gebogen ist. Eine derartige Befestigung ist in Bezug auf die Materialwahl des Gehäuses bzw. des Klemmrings und den Umformungsprozess der Bördelkante aufwendig und erfüllt nicht die Anforderungen hinsichtlich der Festigkeit bei großen axialen Kräften. Auch hier ist ein Zusammenhalt der Hydrobuchse bei großen axialen Kräften nicht sichergestellt.

Der Erfindung liegt daher die Aufgabe zugrunde, ein hydraulisch dämpfendes Buchsenlager bereitzustellen, das über eine verbesserte Befestigungsvorrichtung verfügt.

Diese Aufgabe wird bei einem hydraulisch dämpfenden Buchsenlager nach dem Oberbegriff des Anspruchs 1 durch die Merkmale des kennzeichnenden Teils des Anspruchs 1 gelöst. Weiterbildungen und vorteilhafte Ausgestaltungen der Erfindung ergeben sich aus den Unteransprüchen.

Erfindungsgemäß ist vorgesehen, dass der-Klemmring derart tellerfederförmig ausgebildet und derart in die Öffnung des Gehäuses eingefügt ist, dass dieser sich bei stärkeren axialen Kräften quasi in die Innenfläche des Gehäuses eingräbt. Dadurch wird die versagensfreie Aufnahme von hohen Axiallasten ermöglicht.

Durch diese überraschend einfache Maßnahme kann auf das Anbringen einer so genannten Bördelkante am Gehäuse und das Umbiegen dieser Bördelkante verzichtet werden. Der tellerfederförmig geformte Klemmring hält das mit wenigstens einer Gummifeder verbundene Innenteil sicher im Gehäuse und verhindert ein Herausrutschen in axialer Richtung. Hierbei stützt der tellerfederförmig geformte und in die Öffnung des Gehäuses eingefügte Klemmring das Gehäuse gegenüber der wenigstens einen Gummifeder und damit mittelbar gegenüber dem Innenteil ab. In axialer Richtung auftretende Kräfte werden über die Tellerfeder auf das Gehäuse übertragen, wobei sich Gegenkräfte aufbauen und das mit der wenigstens einen Gummifeder verbundene Innenteil im Gehäuse festhalten. Je größer die axialen Kräfte werden, desto stärker ist der Halt des in die Öffnung des Gehäuses eingefügten tellerfederförmig geformten Klemmrings. Der Klemmring gräbt sich bei stärkeren axialen Kräften quasi in die Innenfläche des Gehäuses ein.

Der tellerfederförmig geformte Klemmring kann hierzu aus Metall oder Kunststoff bestehen.

Vorzugsweise ist der tellerfederförmig geformte Klemmring mit Übermaß in die Öffnung des Gehäuses geklemmt. Dadurch kann der tellerfederförmig geformte Klemmring in vorgegebener Weise positioniert werden und findet sofort Halt auf der Innenfläche des Gehäuses, um axiale Kräfte aufzunehmen und auf das Gehäuse zu übertragen.

Hierbei liegt der weite Außenumfangsrand des tellerfederförmig geformten Klemmrings vorzugsweise am Gehäuse an. Entsprechend ist der weniger weite Außenumfangsrand des tellerfederförmig geformten Klemmrings mittelbar oder unmittelbar auf der wenigstens einen Gummifeder abgestützt.

Eine Weiterbildung sieht vor, dass das Gehäuse auf der Innenseite eine umlaufende Ausnehmung aufweist, in die der weite Außenumfangsrand des tellerfederförmig geformten Klemmrings geklemmt ist. Hierdurch lässt sich der tellerfederförmig geformte Klemmring besonders leicht positionieren. Außerdem wird ein Wegrutschen des tellerfederförmig geformten Klemmrings bei auftretenden axialen Kräften sicher verhindert.

Eine vorteilhafte Ausgestaltung der Erfindung sieht vor, dass der tellerfederförmig geformte Klemmring eine vorgegebene Vorspannung aufweist, die derart groß ist, dass ein axiales Herausrutschen des mit der Gummifeder fest verbundenen Innenteils unter den bei Verwendung des Buchsenlagers gegebenen Bedingungen nicht möglich ist.

Falls eine Federung in axialer Richtung erwünscht ist, ist in einer Weiterbildung der Erfindung vorgesehen, dass der tellerfederförmig geformte Klemmring einen vorgegebenen Federweg aufweist.

Nachfolgend wird die Erfindung anhand eines Ausführungsbeispiels erläutert, das in der Zeichnung dargestellt ist. In dieser zeigen:
- Fig. 1: einen Querschnitt durch ein hydraulisch dämpfendes Buchsenlager nach dem Stand der Technik,
- Fig. 2: einen Querschnitt durch ein erfindungsgemäßes hydraulisch dämpfendes Buchsenlager und
- Fig. 3: eine perspektivische Ansicht des erfindungsgemäß hydraulisch dämpfenden Buchsenlagers.

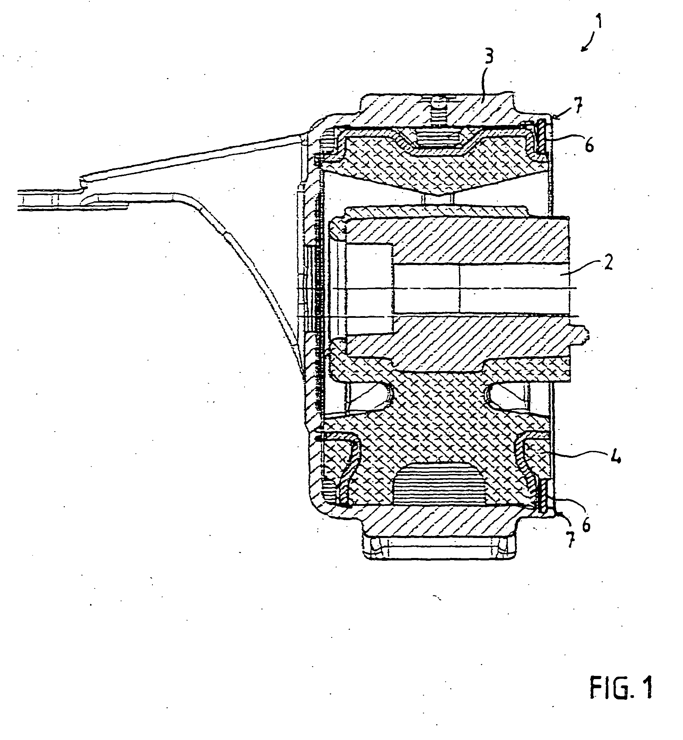

In Fig. 1 ist ein herkömmliches hydraulisch dämpfendes Buchsenlager 1 im Querschnitt dargestellt. Das Buchsenlager 1 umfasst ein Innenteil 2, das in eine Öffnung eines konzentrisch dazu im Abstand angeordneten Gehäuses 3 eingefügt ist, und wenigstens eine zwischen Innenteil 2 und Gehäuse 3 angeordnete Gummifeder 4, wobei das Innenteil 2 wenigstens teilweise mit der Gummifeder 4 verbunden ist.

Ein axiales Herausrutschen des mit der wenigstens einen Gummifeder 4 verbundenen Innenteils 2 aus dem Gehäuse 3 soll dadurch verhindert werden, dass ein auf der wenigstens einen Gummifeder 4 vollflächig aufliegender Klemmring 6 an der Innenseite des Gehäuses 3 angeordnet ist und der Rand 7 des Gehäuses 3 nach innen um den Klemmring 6 herum gebogen ist. Eine derartige Befestigungsvorrichtung ist in Bezug auf die Materialwahl des Gehäuses 3 und den Umformungsprozess der Bördelplatte aufwendig und erfüllt nicht die Anforderungen hinsichtlich der Festigkeit bei großen axialen Kräften. Ein Zusammenhalt der Hydrobuchse 1 ist nicht sichergestellt.

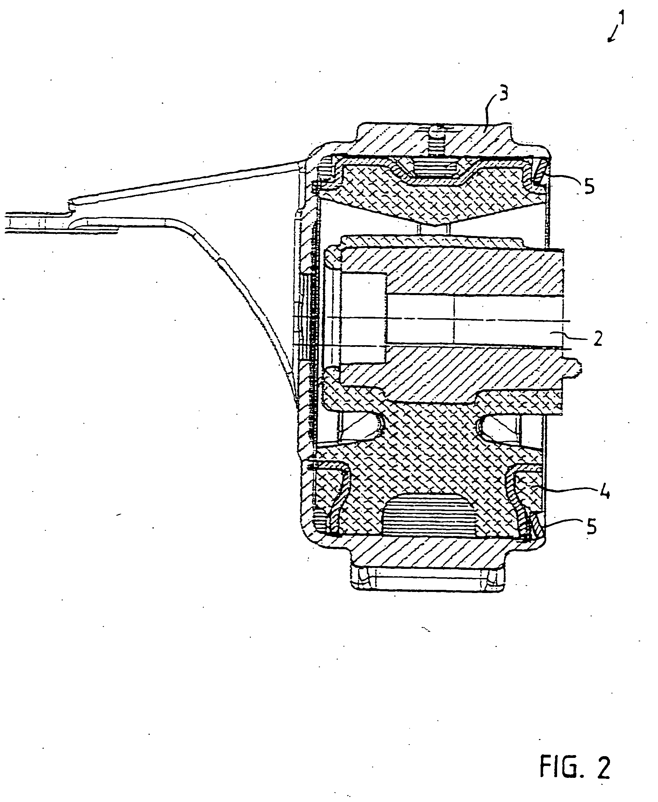

In Fig. 2 ist ein erfindungsgemäßes hydraulisch dämpfendes Buchsenlager 1 dargestellt. Auch dieses Buchsenlager 1 umfasst ein Innenteil 2, das in eine Öffnung eines konzentrisch dazu im Abstand angeordneten Gehäuses 3 eingefügt ist, und wenigstens eine zwischen Innenteil 2 und Gehäuse 3 angeordnete Gummifeder 4, wobei das Innenteil 2 wenigstens teilweise mit der Gummifeder 4 verbunden ist.

Ein axiales Herausrutschen des mit der wenigstens einen Gummifeder 4 verbundenen Innenteils 2 aus dem Gehäuse 3 wird hier jedoch erfindungsgemäß dadurch sicher verhindert, dass die Befestigungsvorrichtung ein tellerfederförmig geformter Klemmring 5 ist, welcher in die Öffnung des Gehäuses 3 eingefügt ist. Hierbei ist der tellerfederförmig geformte Klemmring 5 mit Übermaß in die Öffnung des Gehäuses 3 geklemmt, wobei der weite Außenumfangsrand des tellerfederförmig geformten Klemmrings 5 am Gehäuse 3 anliegt und der entsprechend weniger weite Außenumfangsrand sich auf der wenigstens einen Gummifeder 4 abstützt.

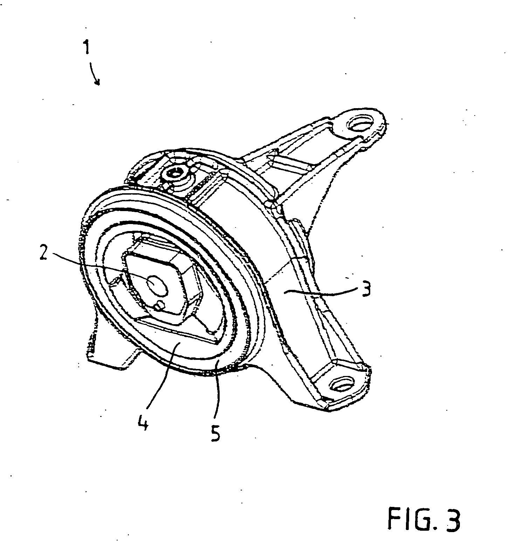

In Fig. 3 ist schließlich das erfindungsgemäße hydraulisch dämpfende Buchsenlager in perspektivischer Ansicht dargestellt, wobei die in Fig. 2 verwendeten Bezugsziffern die gleichen Bauteile in Fig. 3 beschreiben.

### Bezugszeichenliste (ist Bestandteil der Beschreibung)

- 1: Buchsenlager
- 2: Innenteil
- 3: Gehäuse
- 4: Gummifeder
- 5: tellerfederförmig geformter Klemmring
- 6: herkömmlicher Klemmring
- 7: umgebogener Rand

## Patentansprüche

1. Hydraulisch dämpfendes Buchsenlager (1), insbesondere zur Aggregatlagerung in Fahrzeugen, mit einem Innenteil (2), das in eine Öffnung eines konzentrisch dazu im Abstand angeordneten Gehäuses (3) eingefügt ist, wenigstens einer zwischen Innenteil (2) und Gehäuse (3) angeordneten Gummifeder (4), wobei das Innenteil (2) wenigstens teilweise mit der Gummifeder (4) verbunden ist, und einer Befestigungsvorrichtung in Form eines Klemmrings, der mit der Gummifeder (4) und dem Gehäuse (3) im Kontakt steht und das mit der Gummifeder (4) verbundene Innenteil (2) gegen ein axiales Herausrutschen aus dem Gehäuse (3) sichert, **dadurch gekennzeichnet, dass** der Klemmring (5) derart tellerfederförmig ausgebildet und derart in die Öffnung des Gehäuses (3) eingefügt ist, dass dieser sich bei stärkeren axialen Kräften quasi in die Innenfläche des Gehäuses (3) eingräbt.

2. Hydraulisch dämpfendes Buchsenlager (1) nach Anspruch 1, **dadurch gekennzeichnet, dass** der tellerfederförmig geformte Klemmring (5) aus Metall oder Kunststoff besteht.

3. Hydraulisch dämpfendes Buchsenlager (1) nach Anspruch 1 oder 2, **dadurch gekennzeichnet, dass** der tellerfederförmig geformte Klemmring (5) mit Übermaß in die Öffnung des Gehäuses (3) geklemmt ist.

4. Hydraulisch dämpfendes Buchsenlager (1) nach einem der Ansprüche 1 bis 3, **dadurch gekennzeichnet, dass** der weite Außenumfangsrand des tellerfederförmig geformten Klemmrings (5) am Gehäuse (3) anliegt.

5. Hydraulisch dämpfendes Buchsenlager (1) nach einem der Ansprüche 1 bis 4, **dadurch gekennzeichnet, dass** das Gehäuse (3) auf der Innenseite eine umlaufende Ausnehmung aufweist, in die der weite Außenumfangsrand des tellerfederförmig geformten Klemmrings (5) geklemmt ist.

6. Hydraulisch dämpfendes Buchsenlager (1) nach einem der Ansprüche 1 bis 4, **dadurch gekennzeichnet, dass** der tellerfederförmig geformten Klemmring (5) eine vorgegebene Vorspannung aufweist, die derart groß ist, dass ein axiales Herausrutschen des mit der Gummifeder (4) verbundenen Innenteils (2) unter den bei Verwendung des Buchsenlagers (1) gegebenen Bedingungen nicht möglich ist.

7. Hydraulisch dämpfendes Buchsenlager (1) nach einem der Ansprüche 1 bis 6, **dadurch gekennzeichnet, dass** der tellerfederförmig geformte Klemmring (5) einen vorgegebenen Federweg aufweist.

## Claims

1. Hydraulically damping sleeve bearing (1), in particular for mounting an assembly in vehicles, having an inner part (2) which is inserted into an opening in a housing (3), which is arranged concentrically with respect to and at a distance from said inner part (2), having at least one rubber spring (4) arranged between the inner part (2) and the housing (3), the inner part (2) being at least partly connected to the rubber spring (4), and having a fastening device in the form of a clamping ring which is in contact with the rubber spring (4) and the housing (3) and prevents the inner part (2), which is connected to the rubber spring (4), from sliding out of the housing (3) axially, **characterized in that** the clamping ring (5) is formed in the shape of a plate spring, and is inserted into the opening in the housing (3), in such a way that said clamping ring (5) in a sense digs into the inner face of the housing (3) under relatively high axial forces.

2. Hydraulically damping sleeve bearing (1) according to claim 1, **characterized in that** the plate-spring-shaped clamping ring (5) is composed of metal or plastic.

3. Hydraulically damping sleeve bearing (1) according to claim 1 or 2, **characterized in that** the plate-spring-shaped clamping ring (5) is clamped into the opening in the housing (3) with interference.

4. Hydraulically damping sleeve bearing (1) according to one of claims 1 to 3, **characterized in that** the wide outer circumferential edge of the plate-spring-shaped clamping ring (5) bears against the housing (3).

5. Hydraulically damping sleeve bearing according to one of claims 1 to 4, **characterized in that** the housing (3) has, on the inside, a circumferential recess, into which the wide outer circumferential edge of the plate-spring-shaped clamping ring (5) is clamped.

6. Hydraulically damping sleeve bearing according to one of claims 1 to 4, **characterized in that** the plate-spring-shaped clamping ring (5) has a predefined preload which is of such a magnitude that it is not possible for the inner part (2), which is connected to the rubber spring (4), to slide out axially under the conditions experienced during use of the sleeve bearing (1).

7. Hydraulically damping sleeve bearing (1) according to one of Claims 1 to 6, **characterized in that** the plate-spring-shaped clamping ring (5) has a predefined spring travel.

## Revendications

1. Palier en forme de manchon à amortissement hydraulique (1), notamment pour le support d'unités dans des véhicules automobiles, comprenant une partie intérieure (2) qui est insérée dans une ouverture d'un boîtier (3) disposé concentriquement à distance de celle-ci, au moins un ressort en caoutchouc (4) disposé entre la partie intérieure (2) et le boîtier (3), la partie intérieure (2) étant au moins partiellement connectée au ressort en caoutchouc (4), et un dispositif de fixation en forme de bague de serrage, qui est en contact avec le ressort en caoutchouc (4) et le boîtier (3) et qui fixe la partie intérieure (2) connectée au ressort en caoutchouc (4) pour l'empêcher de glisser axialement hors du boîtier (3), **caractérisé en ce que** la bague de serrage (5) est réalisée en forme de rondelle Belleville et est insérée dans l'ouverture du boîtier (3) de telle sorte qu'elle s'enfonce quasiment dans la surface intérieure du boîtier (3) dans le cas de forces axiales relativement élevées.

2. Palier en forme de manchon à amortissement hydraulique (1) selon la revendication 1, **caractérisé en ce que** la bague de serrage (5) en forme de rondelle Belleville se compose de métal ou de plastique.

3. Palier en forme de manchon à amortissement hydraulique (1) selon la revendication 1 ou 2, **caractérisé en ce que** la bague de serrage (5) en forme de rondelle Belleville est serrée avec un surdimensionnement dans l'ouverture du boîtier (3).

4. Palier en forme de manchon à amortissement hydraulique (1) selon l'une quelconque des revendications 1 à 3, **caractérisé en ce que** le bord périphérique extérieur large de la bague de serrage (5) en forme de rondelle Belleville s'applique contre le boîtier (3).

5. Palier en forme de manchon à amortissement hydraulique (1) selon l'une quelconque des revendications 1 à 4, **caractérisé en ce que** le boîtier (3) présente sur le côté intérieur un évidement périphérique dans lequel le bord périphérique extérieur large de la bague de serrage (5) en forme de rondelle Belleville est serré.

6. Palier en forme de manchon à amortissement hydraulique (1) selon l'une quelconque des revendications 1 à 4, **caractérisé en ce que** la bague de serrage (5) en forme de rondelle Belleville présente une précontrainte prédéfinie, qui est telle qu'un glissement axial de la partie intérieure (2) connectée au ressort en caoutchouc (4) soit impossible dans les conditions données d'utilisation du palier en forme de manchon (1).

7. Palier en forme de manchon à amortissement hydraulique (1) selon l'une quelconque des revendications 1 à 6, **caractérisé en ce que** la bague de serrage (5) en forme de rondelle Belleville présente une course de ressort prédéfinie.
